# EUROPÄISCHE PATENTANMELDUNG

(11) **EP 0 930 180 A2**
(43) Veröffentlichungstag der Anmeldung: **21.07.1999**
(21) Anmeldenummer: 99100708.9
(22) Anmeldetag: 15.01.1999
(51) Int. Cl.: B60C 19/00, B60C 13/00, B60C 13/02

(54) **Fahrzeugluftreifen**

(30) Priorität: 19.01.1998 DE 19801579
(71) Anmelder: Continental Aktiengesellschaft, 30165 Hannover (DE)
(72) Erfinder: Veit, Ivar Dr., 64569 Nauheim (DE)

(57) **Zusammenfassung**

Fahrzeugluftreifen, insbesondere in Radialbauart, mit einem profilierten Laufstreifen, einem Gürtel, einer Karkasse, Wulstbereichen mit Wulstkernen und Seitenwänden, wobei an zumindest einem der äußeren Seitenwandbereiche des Reifens eine kreisringförmige oder aus Kreisringsegmenten bestehende Schale aus Gummi od. dgl. angebracht ist. In die Schale (8) ist eine Anzahl von zumindest im wesentlichen in radialer Richtung angeordneten, als λ/4-Resonatoren (9) wirkenden Absorbern integriert.

## Beschreibung

Die gegenständliche Erfindung betrifft einen Fahrzeugluftreifen, insbesondere in Radialbauart, mit einem profilierten Laufstreifen, einem Gürtel, einer Karkasse, Wulstbereichen mit Wulstkernen und Seitenwänden, wobei an zumindest einer der äußeren Seitenwandbereiche des Reifens eine kreisringförmige oder aus Kreisringsegmenten bestehende Schale aus Gummi od. dgl. angebracht ist.

Ein derartiger Fahrzeugluftreifen ist aus der EP 0 038 920 A1 bekannt. Um eine Verringerung der lärmabstrahlenden Reifenschwingungen zu erzielen, wird in dieser Druckschrift vorgeschlagen, mit dem Reifen kraft- und momentschlüssig verbundene Schwingungsabsorber vorzusehen. Diese Schwingungsabsorber, die bei einer der möglichen Ausführungsformen als an den äußeren Seitenflächen des Reifens anzubringende, insbesondere kreisringförmige Platten, Schalen od. dgl. ausgebildet sind, sollen in der Lage sein, vom Reifen Schallenergie abzuleiten und unter Vermeidung von Reflexionen in Wärme umzusetzen. Diese Platten haben daher auch sich verjüngende Querschnittsflächen, und es werden zwischen diesen Platten und den äußeren Seitenflächen des Reifens Dämpfungsschichten angeordnet, die sowohl mit den Reifenaußenflächen als auch mit den Platteninnenflächen verbunden sind. Diese Dämpfungsschichten können beispielsweise aus Schaumstoff bestehen.

Die Reifenschwingungen, die während des Abrollens eines Reifens entstehen, sind nun eine der Hauptursachen der Lärmabstrahlung von Reifen. Dabei strahlen diese Reifenschwingungen nicht nur Lärm in die Umgebung ab, es wird auch Schall in den Torusraum des Reifens emittiert, wo die Schallleistung um einiges größer ist und wo hohe Lärmpegel entstehen. Über die Seitenwände dringt nun ein Teil dieses Lärms nach außen.

Die in den Reifentorusraum eingeleiteten Schwingungen sind zwar vom jeweiligen Anregungsmechanismus abhängig, wobei hier die Fahrzeuggeschwindigkeit, die Strukturierung des Laufstreifenprofiles und auch die Fahrbahn eine Rolle spielen, aber es findet auch eine Überlagerung der Schwingungen in der Reifenstruktur statt, wobei diesbezüglich die Konstruktion und das Material des Gürtels und andere Faktoren einen Einfluß haben. Es wird nun schon seit längerem beobachtet bzw. festgestellt, daß es gerade im Bereich um 1000 Hz ein besonders ausgeprägtes Maximum an Schallleistung gibt, und zwar bei PKW- Reifen zwischen ca. 950 und ca. 1000 Hz und bei LKW-Reifen zwischen ca. 850 und ca. 900 Hz. Eine wirkungsvolle Verminderung der Lärmabstrahlung von Reifen sollte daher auch darauf abzielen, diesen sogenannten 1000 Hz-Berg durch geeignete Maßnahmen aufzufangen.

Hier setzt nun die Erfindung ein, deren Aufgabe darin besteht, bei einem Reifen der eingangs genannten Art die den Seitenwänden vorgesetzten Schalen derart auszubilden, daß eine wirkungsvolle Verminderung des vom Reifen abgestrahlten Geräusches im Bereich von rund 1000 Hz möglich ist.

Gelöst wird die gestellte Aufgabe erfindungsgemäß dadurch, daß in die Schale eine Anzahl von zumindest im wesentlichen in radialer Richtung angeordneten, als λ/4-Resonatoren wirkenden Absorbern integriert ist.

Bei der gegenständlichen Erfindung handelt es sich daher um eine besonders wirkungsvolle Lösung, eine schmalbandige Geräuschabsorbtion bei Kraftfahrzeugreifen zu erzielen. λ/4-Resonatoren besitzen eine sehr große schallabsorbierende Wirkung für die ihrer Länge entsprechenden Frequenz. Gerade in den den Seitenwänden vorgesetzten Schalen lassen sich solche λ/4-Resonatoren, die in radialer Richtung verlaufend angeordnet sind, so anordnen, daß wenig störende Einflüsse auf die sonstigen Eigenschaften des Reifen zu erwarten sind. Der weitere Vorteil des Unterbringens der λ/4-Resonatoren in einer vorgesetzten Schale ist der, daß der gesamte Seitenwandbereich entsprechend abgedeckt werden kann, was für eine optimale Wirkung von Vorteil ist.

Für eine Optimierung der Wirkung der Resonatoren sind einige Ausgestaltungsdetails und auch die Anordnung der Resonatoren von Bedeutung. Dazu gehört beispielsweise, daß die Öffnungen der λ/4-Resonatoren an den radial äußeren Enden sind.

Es ist ferner auch von Vorteil, wenn die Querschnittsfläche der Öffnungen und der Hohlräume der λ/4-Resonatoren zwischen 100 und 200mm² beträgt.

Auch die Anzahl der in der Schale untergebrachten Resonatoren ist von Bedeutung. Der gegenseitige Abstand der λ/4-Resonatoren an ihren radial inneren Enden sollte daher gering sein und nur einige Zentimeter, insbesondere 1,5 bis 3 cm, betragen.

Wenn die λ/4-Resonatoren geringfügig unterschiedliche Längen besitzen, kann die Absorptionswirkung auf einen gewissen Frequenzbereich erstreckt werden.

Eine gute und dauerhafte Verbindung der Schalen am Reifen ist ebenfalls wichtig. Die Schalen werden daher mit insbesondere massiv ausgeführten Fußteilen mit dem Reifen im Bereich knapp oberhalb der Wüste durch Anvulkanisieren verbunden.

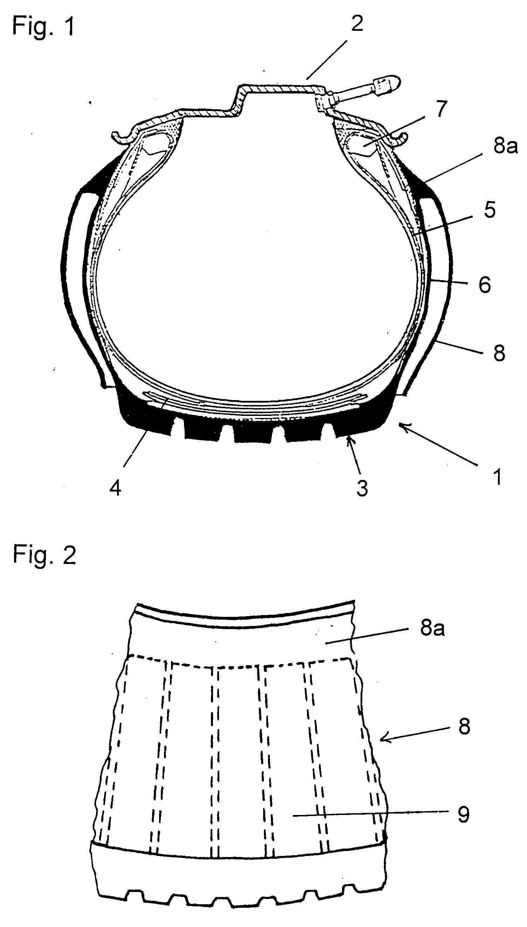

Weitere Merkmale, Vorteile und Einzelheiten der Erfindung werden nun anhand der Zeichnung, die ein Ausführungsbeispiel darstellt, näher beschrieben. Die beiden Zeichnungsfiguren sind schematische Darstellungen, wobei Fig. 1 einen Querschnitt durch einen Reifen mit einer Ausführungsform von schallabsorbierenden Schalen und Fig. 2 eine Seitenansicht eines Teiles einer solchen Schale zeigen.

In Fig. 1 ist der Reifen 1 auf einer Felge 2 montiert dargestellt und in bekannter Weise aufgebaut. Der Reifen 1 umfaßt somit einen profilierten Laufstreifen 3, einen mehrlagig ausgeführten Gürtel 4, eine Radialkarkasse 5, Seitenwände 6 und Wulstbereiche mit Wulstkernen 7. Es wird darauf verwiesen, daß die gegenständliche Erfindung nicht auf einen bestimmten Typ von Luftreifen - PKW-Reifen, LKW-Reifen oder Reifen für andere Einsatzzwecke - eingeschränkt ist.

Die Seitenwände 6 des Reifens 1 sind außen durch vorgesetzte kreisringförmig ausgebildete Schalen 8 überdeckt. Die Schalen 8 befinden sich dabei in einem Abstand von einigen Millimetern bis zu ca. 2cm zu den Seitenwänden 6 und weisen etwas massiver ausgeführte Fußteile 8a auf, mit welchen die Schalen 8 mit dem Reifen 1 im Bereich der Wulstbereiche fest verbunden sind. Die Schalen 8 werden bevorzugt aus Gummi hergestellt, sodaß die Verbindung der Schalen 8 mit dem Reifen 1 durch Anvulkanisieren erfolgen kann. Als Material für die Schalen 8 kommen auch andere mit Gummi vergleichbare Materialien in Frage, die sich mit dem Reifen - dies kann unter Anwendung von Druck und/oder Wärme erfolgen - gut verbinden lassen.

Von besonderer Bedeutung ist die spezielle Ausführung der Schalen 8 mit integrierten λ/4-Resonanzabsorbern. Wie aus Fig. 2 ersichtlich ist, sind die λ/4-Resonatoren 9 in radialer Richtung verlaufend angeordnet, wobei sie in bekannter Weise als Hohlräume, hier mit rechteckigem oder etwa rechteckigem Querschnitt, ausgestaltet sind, die einerends, und zwar an ihren den Wulstbereichen zugewandten Enden, geschlossen und anderends offen sind. Von ihrer Länge her werden diese λ/4-Resonatoren 9 bevorzugt so ausgelegt, daß sie eine maximale schallabsorbierende Wirkung für Frequenzen in der Größenordnung von 1000 Hz besitzen. Bei exakt 1000 Hz entspricht dies einer Hohlraumlänge von 8,57 cm. Gerade in den relevanten Frequenzbereichen lassen sich daher die Resonatoren 9 in dem für die Schalen 8 zur Verfügung stehende Bereich sehr gut unterbringen.

Die Resonatoren 9 werden über dem Umfang der Schalen 8 nebeneinander in einem gegenseitigem Abstand von einigen Zentimetern, im Bereich des Fußteiles von insbesondere etwa 1,5 bis 3 cm, angeordnet und sämtlich entweder zumindest im wesentlichen gleich lang oder mit geringfügig unterschiedlichen Längen ausgeführt, um den Frequenzbereich um die erwähnten 1000 Hz gut abzudecken.

Wie eingangs bereits erwähnt, sind in dem beim Abrollen von Reifen sich ausbildenden Reifen/Fahrbahngeräusch Maxima der abgestrahlten Schalleistung feststellbar, wobei sowohl bei PKW- als auch bei LKW-Reifen ein derartiges Maximum bei Frequenzen im Bereich um 1000 Hz liegt. Man spricht in diesem Zusammenhang auch von einem 1000 Hz-Berg. Die Entstehung des 1000 Hz-Berges ist dabei weitgehend unabhängig von der Fahrgeschwindigkeit, von der Ausgestaltung des Profils etc.

Wie schon erwähnt, werden die Schalen 8 insbesondere aus Gummi gefertigt. Die Resonatoren 9 unterstützen die erwünschte Eigensteifigkeit der Schalen 8. Die Dicke des Materials der Schalen 8 zwischen den einzelnen Resonatoren 9 wird in einer Größenordnung von 3 bis 4 mm gewählt. Der Querschnitt der Öffnung entspricht dem Querschnitt des rohrförmigen Hohlraumes der Resonatoren 9, wobei der Querschnitt Abmessungen in der Größenordnung von 20mm x 5 bis 10mm besitzt. Die Querschnittsfläche beträgt daher vorzugsweise zwischen 100 und 200mm².

Die Schalen 8 können ferner aus zwei Formteilen gefertigt werden, die zusammenvulkanisiert oder zusammengeklebt werden. Erwähnt sei ferner, daß anstelle von einteiligen kreisringförmigen Schalen auch Kreisringsegmente vorgesehen werden können. Der Querschnitt der Resonatoren kann ferner von der beschriebenen Rechteckform abweisen.

Die Schalen 8 haben neben der schallabsorbierenden auch eine schalldämmende Wirkung, indem sie den insbesondere seitlich vom Reifen abgestrahlten Schall vermindern.

## Patentansprüche

1. Fahrzeugluftreifen, insbesondere in Radialbauart, mit einem profilierten Laufstreifen, einem Gürtel, einer Karkasse, Wulstbereichen mit Wulstkernen und Seitenwänden, wobei an zumindest einem der äußeren Seitenwandbereiche des Reifens eine kreisringförmige oder aus Kreisringsegmenten bestehende Schale aus Gummi od. dgl. angebracht ist, dadurch gekennzeichnet, daß in die Schale (8) eine Anzahl von zumindest im wesentlichen in radialer Richtung angeordneten, als λ/4-Resonatoren (9) wirkenden Absorbern integriert ist.

2. Fahrzeugreifen nach Anspruch 1, dadurch gekennzeichnet, daß die Öffnungen der λ/4-Resonatoren (9) an den radial äußeren Enden sind.

3. Fahrzeugreifen nach Anspruch 1 oder 2, dadurch gekennzeichnet, daß die Querschnittsfläche der Öffnungen und der Hohlräume der λ/4-Resonatoren (9) zwischen 100 und 200mm² beträgt.

4. Fahrzeugreifen nach einem der Ansprüche 1 bis 3, dadurch gekennzeichnet, daß die λ/4-Resonatoren (9) an ihren radial inneren Enden in einem Abstand von einigen Zentimetern, insbesondere von 1,5 bis 3cm, angeordnet sind.

5. Fahrzeugreifen nach einem der Ansprüche 1 bis 4, dadurch gekennzeichnet, daß die λ/4-Resonatoren (9) geringfügig unterschiedliche Längen aufweisen.

6. Fahrzeugreifen nach einem der Ansprüche 1 bis 5, dadurch gekennzeichnet, daß die Schalen (8) mit insbesondere massiv ausgeführten Fußteilen (8a) mit dem Reifen im Bereich knapp oberhalb der Wülste durch Anvulkanisieren verbunden sind.
